# EUROPÄISCHE PATENTSCHRIFT

(11) **EP 0 557 564 B1**
(45) Veröffentlichungstag und Bekanntmachung des Hinweises auf die Patenterteilung: **12.04.1995**
(21) Anmeldenummer: 92103457.5
(22) Anmeldetag: 28.02.1992
(51) Int. Cl.: G01D 5/26, G01D 18/00

(54) **Montagevorrichtung für eine Winkelmesseinrichtung**
Mounting device for an angular position encoder
Dispositif de montage pour un dispositif pour mesurer des angles

(43) Veröffentlichungstag der Anmeldung: 01.09.1993
(73) Patentinhaber: Dr. Johannes Heidenhain GmbH, D-83292 Traunreut (DE)
(72) Erfinder: Mitterreiter, Johann, Dipl.-Ing., W-8221 Tacherting (DE)

(56) Entgegenhaltungen:
- EP-A- 0 280 390
- US-A- 3 900 732
- US-A- 5 057 684

## Beschreibung

Die Erfindung betrifft eine Winkelmeßeinrichtung gemäß dem Oberbegriff des Anspruchs 1.

Derartige Winkelmeßeinrichtungen werden auch als "Einbaudrehgeber" bezeichnet (z. B. Firmendruckschrift der DR. JOHANNES HEIDENHAIN GmbH, Traunreut: Drehgeber, Ausgabe 2/88). Darauf bezieht sich auch die EP 0 353 395 A1.

In dieser Druckschrift besteht die Montagevorrichtung aus mehreren Spannbügel, die aus verschiedenen radialen Richtungen durch Öffnungen in den Stator in eine Ringnut der Nabe einragen und dabei letztere zwischen ihren Armen einklemmen und somit die Nabe mit Teilscheibe gegenüber dem Stator mit der Abtasteinheit in axialer und radialer Richtung festlegen. Es wird ferner auch vorgeschlagen, einen einzelnen Spannbügel zu verwenden, wobei der Spannbügel dann aber die Nabe gegenüber dem Stator an mindestens drei winkelversetzten Stellen festklemmen muß. Klar ist allerdings nicht, wie dann die Festlegung in radialer Richtung erfolgt.

Ferner ist aus der US-PS 4,639,595 eine vormontierte Winkelmeßeinrichtung ohne eigene Lagerung bekannt. Im vormontierten Zustand bewirkt eine Klemmfeder den Zusammenhalt der Abtasteinrichtung mit der Nabe, an der der Teilungsträger angebracht ist. An der Nabe ist ein Anschlag Vorgesehen, der die Abtasteinrichtung bei der Vormontage berührt und die Nabe in radialer und axialer Richtung fixiert. In diesem Zustand wird die Winkelmeßeinrichtung auf die Antriebswelle geschoben und die Abtasteinrichtung an der Anbaufläche der Antriebseinheit befestigt. Danach wird die Klemmfeder außer Eingriff gebracht und die Nabe in axialer Richtung auf der Antriebswelle verschoben. Diese Verschiebung ist notwendig, um die Berührung des Anschlages der Nabe mit der Abtasteinrichtung aufzuheben und eine reibungsfreie Drehung der Nabe relativ zur Abtasteinrichtung zu gewährleisten.

Bei dieser Winkelmeßeinrichtung ist zwar im vormontierten Zustand eine definierte Zuordnung zwischen der Nabe und der Abtasteinrichtung in radialer und axialer Richtung bezüglich der Nabenachse gegeben, diese Zuordnung muß aber während des Anbaus an die Antriebseinheit gelöst werden. Durch die notwendige axiale Verschiebung der Nabe und somit des Teilungsträgers relativ zur Abtasteinrichtung kann ohne zusätzliche Hilfsmittel keine definierte Zuordnung erzielt werden, und zwar weder in radialer noch in axialer Richtung. Die in der US-PS 4,639,595 offenbarten Maßnahmen bewirken nur eine Lagezuordnung im nichteingebauten Zustand.

Weitere Winkelmeßeinrichtungen sind in der US-PS 3,900,732, der US-PS 4,556,792 und der DE-OS 37 40 744 beschrieben. Zur axialen und radialen Einstellung der Nabe gegenüber der Abtasteinrichtung sind aufwendige Justiervorrichtungen notwendig. Die Fixierung der Nabe gegenüber der Abtasteinrichtung erfolgt mittels einer Vielzahl von Elementen, die alle vom Anwender wieder mühsam und zeitaufwendig entfernt werden müssen.

Der Erfindung liegt die Aufgabe zugrunde, eine Winkelmeßeinrichtung zu schaffen, bei der die Zuordnung zwischen dem Teilungsträger und der Abtasteinrichtung bereits vom Meßgerätehersteller vorgegeben ist und somit von vornherein eine exakte Ausrichtung der Teilung relativ zur Abtasteinrichtung gewährleistet ist. Dabei soll die Winkelmeßeinrichtung extrem einfach zu montieren sein.

Diese Aufgabe wird durch eine Winkelmeßeinrichtung gemäß Anspruch 1 gelöst.

Die besonderen Vorteile der erfindungsgemäßen Winkelmeßeinrichtung liegen darin, daß die Zuordnung zwischen der Teilung und der Abtasteinrichtung in axialer und in radialer Richtung vom Meßgerätehersteiler durch die für viele Typen verwendbare Hilfsvorrichtung vorgegeben ist und trotz Vormontage mit diesen einfachen Mitteln die Zuordnung auch während der Anlieferung und dem Anbau aufrechterhalten bleibt. Die Montage einer derartigen Winkelmeßeinrichtung ist vom Anwender ohne Zeitaufwand für Justierungen und ohne geschultes Personal möglich.

Anhand der Zeichnungen wird ein Ausführungsbeispiel der Erfindung näher erläutert.

Es zeigt
- Figur 1: eine Winkelmeßeinrichtung schematisch im Schnitt;
- Figur 2: eine Seitenansicht der Winkelmeßeinrichtung;
- Figur 3: eine Draufsicht und
- Figur 4: eine Montagevorrichtung in drei Ansichten.

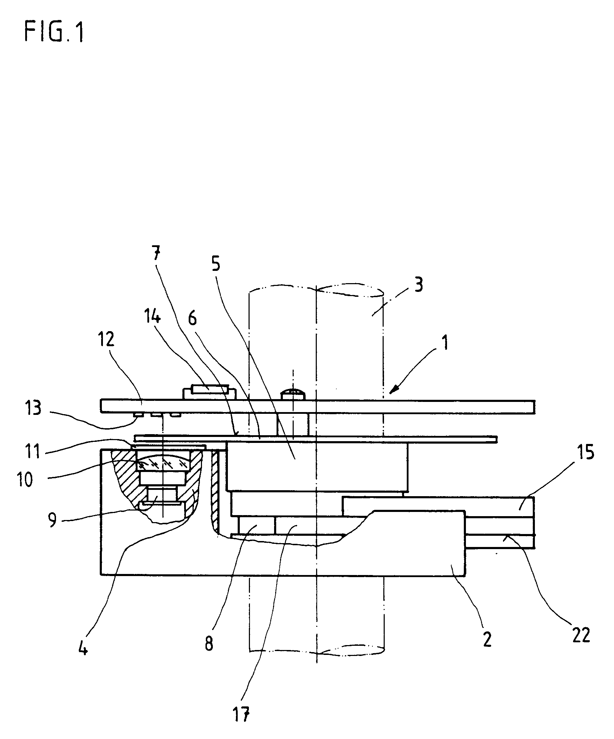

In Figur 1 ist eine Winkelmeßeinrichtung 1 dargestellt, die an einer nicht dargestellten Antriebseinheit, beispielsweise einem Motor, mittels eines Stators 2 angebaut ist. Mit der Winkelmeßvorrichtung 1 soll die Drehung einer strichpunktiert angedeuteten Antriebswelle 3 gegenüber einer Abtasteinrichtung 4 gemessen werden. Die Winkelmeßeinrichtung 1 weist eine Nabe 5 auf, an der eine Scheibe 6 mit einer Teilung 7 zentrisch angebracht ist. Die Nabe 5 weist eine Ringnut 8 auf.

Die Abtasteinrichtung 4 besteht aus einer Lichtquelle 9, einem Kondensor 10, einer Abtastplatte 11 sowie einer Platine 12 mit Photoelementen 13 und weiteren elektrischen Bauelementen 14. Die Teilung 7 wird in bekannter Weise im Durchlichtverfahren abgetastet. Die Abtastsignale werden in üblicher und daher nicht dargestellter Weise über eine elektrische Leitung zu einer Auswerteeinrichtung, so z.B. zu einem Zähler oder einer numerischen Steuerung geleitet.

Die Abtasteinrichtung 4, insbesondere die Abtastplatte 11, muß sowohl in radialer als auch in axialer Richtung genau zur Teilung 7 ausgerichtet sein. Diese Zuordnung ist durch die Fertigung der Nabe 5 und der Abtasteinrichtung 4 vorgegeben.

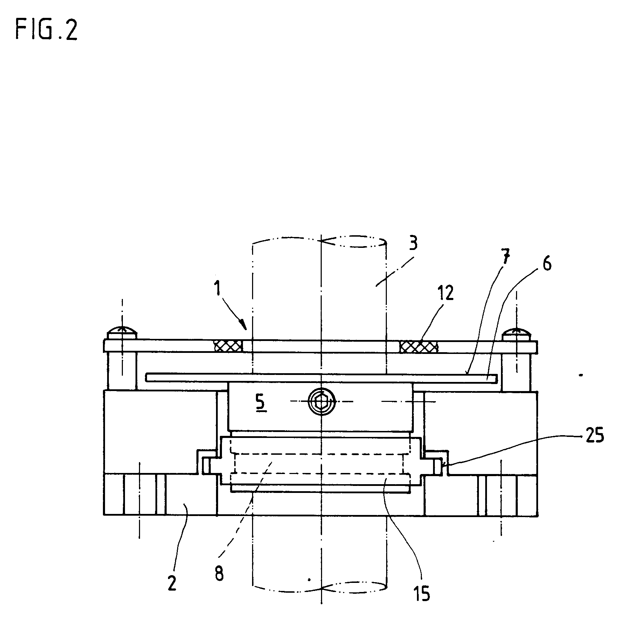

Auch aus Figur 2 ist ersichtlich, daß sich in der Nabe 5 eine Ringnut 8 befindet.

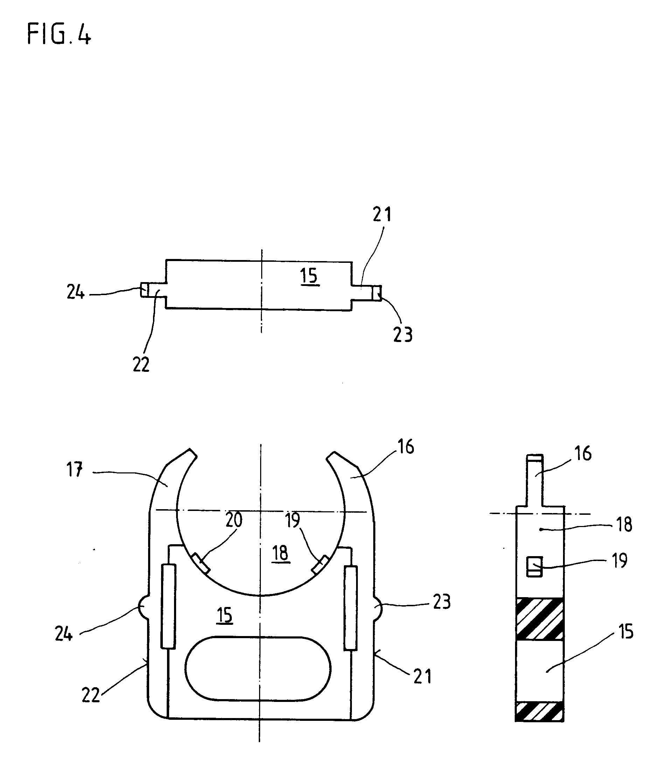

In Figur 4 ist in drei Ansichten eine Montagevorrichtung 15 gezeigt. Die Montagevorrichtung 15 verfügt über elastische Haltebacken 16 und 17, die eine am Umfang offene Ausnehmung 18 begrenzen. Im Inneren der Ausnehmung 18 befinden sich an den Oberflächen der Haltebacken 16 und 17 Anschläge 19 und 20, die in die Nut 8 der Nabe 5 zusammen mit den elastischen Haltebacken 16 und 17 eingreifen. Die Haltebacken 16 und 17 umschließen die Nabe 5 teilweise, so daß die Montagevorrichtung 15 in der Ebene der Nut 8 auf die Nabe 5 aufschnappbar ist und die Anschläge 19 und 20 die axiale und radiale Lage der Nabe 5 und damit der Teilscheibe 6 fixieren.

An den äußeren Oberflächenbereichen 21, 22 der Montagevorrichtung 15 befinden sich weitere Anschläge in Form von nachgiebigen Nocken 23 und 24. Diese Anschläge können auch als Radial-Stopper ausgebildet sein, die an der Statoraußenfläche anschlagen.

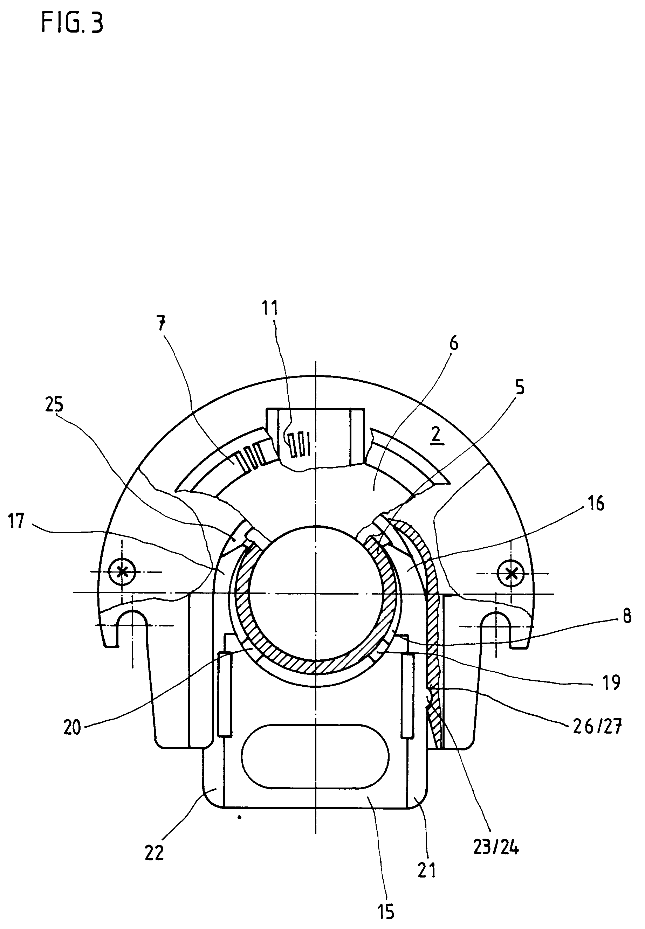

Die äußeren Oberflächenbereiche 21, 22 und die nachgiebigen Nocken 23, 24 sind paßgenau auf eine entsprechende, radial verlaufende Aufnahmeöffnung 25 im Stator 2 abgestimmt, was aus den Figuren 2 und 3 ersichtlich ist.

Für die Montage wird die Montagevorrichtung 15 auf die Nabe 5 geschoben, die die Teilscheibe 6 trägt. Durch die Nut 8 in der Nabe 5 und die Anschläge 19 und 20 im Zusammenwirken mit den elastischen Haltebacken 16 und 17 wird die aus Nabe 5 und Teilscheibe 6 bestehende Baugruppe axial und radial fixiert in der Montagevorrichtung 15 gehalten.

Diese Einheit als erweiterte Baugruppe, bestehend aus Montagevorrichtung 15, Nabe 5 und Teilscheibe 6, wird in die radial verlaufende Aufnahmeöffnung 25 im Stator 2 eingeführt, wobei die Radialbewegung durch die nachgiebigen Nocken 23 und 24 begrenzt wird, wenn diese mit Aussparungen 26 und 27 in der Aufnahmeöffnung 25 in Eingriff kommen. Die axiale Fixierung ergibt sich aus den aneinander angepaßten Abmessungen der Aufnahmeöffnung 25 und der Flanschdicke der äußeren Oberflächenbereiche 21, 22 der Montagevorrichtung 15.

Die erweiterte Baugruppe 15, 5, 6 wird in dieser justierten Einheit auf die Antriebswelle 3 aufgefädelt und der Stator 2 am nicht dargestellten Flansch der Antriebseinheit befestigt. Die Nabe 5 wird an der Antriebswelle 3 befestigt.

Der axiale und radiale Abstand zwischen der Teilscheibe 6 und der Abtasteinheit 4 bzw. der Teilung 7 und der Abtastplatte 11 wird dabei durch die korrespondierenden Öffnungen im Stator 2 und den Anschlagflächen der Montagevorrichtung 15 und der Nabe 5 zuverlässig eingestellt.

Nach Montage der Winkelmeßeinrichtung 1 an der Antriebseinheit wird die Montagevorrichtung 15 durch Herausziehen in radialer Richtung entfernt und kann für andere Einheiten verwendet werden. Bei einheitlichem Naben-Außendurchmesser kann die Montagevorrichtung für viele Winkelmeßeinrichtungstypen verwendet werden, auch wenn sie auf unterschiedliche Wellendurchmesser montiert werden müssen. Naben-Außendurchmesser, Montagevorrichtung und Stator bleiben davon unberührt, was die Lagerhaltung beim Hersteller sehr vereinfacht.

## Patentansprüche

1. Winkelmeßeinrichtung zur Messung der Winkellage zweier relativ zueinander drehbarer Objekte, bei der die Teilung einer an einer Nabe konzentrisch befestigten Teilscheibe, die mit dem einen zu messenden Objekt verbindbar ist, von wenigstens einer Abtasteinheit abgetastet wird, die über einen Stator mit dem anderen zu messenden Objekt verbindbar ist, und bei der eine Montagevorrichtung vorgesehen ist, die die axiale als auch die radiale Lagebeziehung der Teilscheibe und der Abtasteinheit bereits vor deren Montage an den zu messenden Objekten durch Anschlagflächen eindeutig festlegt, wobei der Stator der Winkelmeßeinrichtung eine radial verlaufende Aufnahmeöffnung für die eine einteilige, im wesentlichen Bügelform aufweisende Montagevorrichtung aufweist, und die Montagevorrichtung eine am Umfang offene Ausnehmung zwischen zwei Haltebacken für die Baugruppe von Nabe und Teilscheibe aufweist, dadurch gekennzeichnet, daß die Montagevorrichtung (15) an ihren äußeren Oberflächenbereichen (21, 22) Anschläge (23, 24) aufweist, die in Aussparungen (26, 27) in der Aufnahmeöffnung (25) eingreifen, so daß die Montage-Vorrichtung (15) in radialer als auch axialer Richtung des Stators (2) festgelegt ist, und daß in der Ausnehmung (18) weitere Anschläge (19, 20) vorgesehen sind, die mit der Baugruppe von Nabe (5) und Teilscheibe (6) zu deren Fixierung in der Montagevorrichtung zusammenwirken.

2. Winkelmeßeinrichtung nach Anspruch 1, dadurch gekennzeichnet, daß die Anschläge als nachgiebige Nocken (23, 24) oder als Radial-Stopper ausgebildet sind.

3. Winkelmeßeinrichtung nach Anspruch 1, dadurch gekennzeichnet, daß die Montagevorrichtung (15) vom Nabeninnendurchmesser unabhängig ist.

4. Winkelmeßeinrichtung nach Anspruch 1, dadurch gekennzeichnet, daß die Montagevorrichtung (15) ein Radialschieber ist.

5. Winkelmeßeinrichtung nach Anspruch 4, dadurch gekennzeichnet, daß für die Montagevorrichtung (15) im Stator (2) Parallelführungen (25) vorgesehen sind, die mit den äußeren Oberflächenbereichen (21, 22) der Montagevorrichtung (15) zusammenwirken.

## Claims

1. Angle measuring device for measuring the angular position of two relatively rotatable objects, in which the graduation of an index disc which is mounted concentrically on a hub and which can be connected to one object to be measured is scanned by at least one scanning unit which can be connected by a stator to the other object to be measured, and in which an assembly device is provided which unambiguously fixes both the axial and the radial positional relationships of the index disc and scanning unit already before assembly thereof on the objects to be measured by stop faces, wherein the stator of the angle measuring device comprises a radially extending receiving opening for the one-piece, essentially stirrup-shaped assembly device, and the assembly device comprises a recess open at the circumference between two holding jaws for the subassembly of hub and index disc, characterised in that the assembly device (15) on its outer surface regions (21, 22) comprises stops (23, 24) which engage in notches (26, 27) in the receiving opening (25), so that the assembly device (15) is fixed in radial and axial directions of the stator (2), and in that in the recess (18) are provided further stops (19, 20) which cooperate with the subassembly of hub (5) and index disc (6) for fixing thereof in the assembly device.

2. Angle measuring device according to claim 1, characterised in that the stops are constructed as flexible projections (23, 24) or as radial stoppers.

3. Angle measuring device according to claim 1, characterised in that the assembly device (15) is independent of the inside diameter of the hub.

4. Angle measuring device according to claim 1, characterised in that the assembly device (15) is a radial slide.

5. Angle measuring device according to claim 4, characterised in that for the assembly device (15) in the stator (2) are provided parallel guides (25) which cooperate with the outer surface regions (21, 22) of the assembly device (15).

## Revendications

1. Dispositif de mesure d'angles pour mesurer la position angulaire de deux objets mobiles en rotation l'un par rapport à l'autre, dans lequel la graduation d'un disque gradué qui est fixé de manière concentrique sur un moyeu lié à l'un des objets à mesurer est balayée par au moins une unité de balayage qui, par l'intermédiaire d'un stator, est liée à l'autre objet à mesurer et dans lequel il est prévu un dispositif de montage qui definit de manière précise, au moyen de surfaces de butée, les positions axiale et radiale réciproques du disque gradué et de l'unité de balayage avant le montage de ces éléments sur les objets à mesurer, le stator du dispositif de mesured'angles comportant une ouverture réceptrice radiale pour le dispositif de montage sensiblement en forme d'étrier et le dispositif de montage comportant un logement ouvert à sa périphérie compris entre deux mâchoires pour l'organe composé du moyeu et du disque gradué, caractérisé par le fait que le dispositif de montage (15) comporte sur des parties de surface (21, 22) extérieures des butées (23, 24) qui pénètrent dans des évidements (26, 27) de l'ouverture réceptrice (25) de manière telle que le dispositif de montage (15) est immobilisé aussi bien dans la direction radiale que dans la direction axiale et par le fait qu'il est prévu dans le logement (18) des butées (19, 20) supplémentaires qui coopèrent avec l'organe constitué par le moyeu (5) et le disque gradué (6) aux fins de positionner celui-ci dans le dispositif de fixation.

2. Dispositif de mesure d'angles selon la revendication 1, caractérisé par le fait que les butées sont agencées sous forme de cames (23, 24) flexibles ou de butées radiales.

3. Dispositif de mesure d'angles selon la revendication 1, caractérisé par le fait que le dispositif de montage (15) est indépendant du diamètre intérieur du moyeu.

4. Dispositif de mesure d'angles selon la revendication 1, caractérisé par le fait que le dispositif de montage (15) est un élément coulissant radial.

5. Dispositif de mesure d'angles selon la revendication 4, caractérisé par le fait qu'il est prévu dans le stator (2), pour le dispositif de montage des glissières (25) parallèles qui coopèrent avec les parties de surface (21, 22) extérieures.
